**Europäisches Patentamt**

**European Patent Office**

**Office européen des brevets**

(19)

(11) Veröffentlichungsnummer: **0 158 015**
**B1**

(12) # EUROPÄISCHE PATENTSCHRIFT

(45) Veröffentlichungstag der Patentschrift:
**27.04.88**

(51) Int. Cl.⁴: **F 16 C 19/54**

(21) Anmeldenummer: **85100981.1**

(22) Anmeldetag: **31.01.85**

(54) **Mittenfreies Grosswälzlager.**

(30) Priorität: **07.04.84 DE 3413286**

(43) Veröffentlichungstag der Anmeldung:
**16.10.85 Patentblatt 85/42**

(45) Bekanntmachung des Hinweises auf die Patenterteilung:
**27.04.88 Patentblatt 88/17**

(84) Benannte Vertragsstaaten:
**AT BE CH DE FR GB IT LI LU NL SE**

(56) Entgegenhaltungen:
**DE-A-2 634 776**
**DE-A-3 104 097**

(73) Patentinhaber: **Hoesch Aktiengesellschaft,
Eberhardstrasse 12, D-4600 Dortmund 1 (DE)**

(72) Erfinder: **Andree, Dietrich, Dipl.- Ing., Sadelhof 1,
D-4600 Dortmund 70 (DE)**
Erfinder: **Creutz, Walter, Dipl.- Ing., Winkelstrasse
26, D-4600 Dortmund 18 (DE)**

EP 0 158 015 B1

## Beschreibung

Die Erfindung betrifft ein mittenfreies Großwälzlager in Doppelbauweise mit drei Lagerringen, von denen zwei unabhängig voneinander und gegenüber dem dritten verdrehbar sind, und zwischen diesen angeordneten Wälzkörperreihen zum drehbeweglichen Verbinden zweier Bauteile, wobei ein Mittel-ring, bestehend aus mehreren Teilringen, mit einem ersten Bauteil und eine Außenring oder ein Innenring mit einem zweiten Bauteil fest verbindbar ist.

Drehbeweglich miteinander verbundene Bauteile sollen in besonderen Fällen auch nach Ausfall der sie verbindenen Wälzlagerung in der Lage sein, über einen weiteren Zeitraum ihre Funktion zu erfüllen. Weiterhin kann es vorkommen, daß kein Austausch der Wälzlagerung vorgenommen werden kann oder soll.

Für diesen Zweck werden mittenfreie Großwälzlager in Doppelbauweise mit drei Lagerringen und zwischen diesen angeordneten Wälzkörperreihen eingesetzt. Dadurch wird erreicht, daß nach Ausfall einer kompletten Lagerung eine zweite komplette Lagerung eingebaut zur Verfügung steht, die die volle Lagerfunktion übernehmen kann (z. B. DD-A-57 247 und DE-A-26 34 776). Nachteilig bei der DD-A-57 247 ist, daß die zweite bereitstehende komplette Lagerung bereits beim Betrieb der ersten Lagerung der vollen Belastung ausgesetzt ist und dadurch bereits geschädigt sein kann. Bei der DE-A-26 34 776 ist vorgesehen, daß durch Unterlegen eines mehrteiligen Tragringes nur jeweils eine Wälzlagerung zum Tragen kommt, wobei die zweite Wälzlagerung unbelastet bleibt. Nachteilig bei dieser Ausführung ist insbesondere der Einsatz zusätzlicher Bauteile, wodurch der Umbau kompliziert und das Lager teurer wird.

Der Erfindung liegt die Aufgabe zugrunde, ein mittenfreies Großwälzlager zu schaffen, bei dem einerseits das bereitstehende Ersatzlager nicht bereits beim Betrieb des ersten Lagers der vollen Betriebsbelastung ausgesetzt wird und andererseits nach Ausfall des ersten Lagers auf einfache und wirtschaftliche Art das bereitstehende Lager eingesetzt werden kann.

Diese Aufgabe wird erfindungsgemäß bei einem Großwälzlager der eingangs näher beschriebenen Art dadurch gelöst, daß der mit dem zweiten Bauteil verbundene Außenring ebenfalls aus mehreren Teilringen besteht und eine Teilfuge dieses Außenringes etwa in der gleichen Höhenlage wie die die aufliegende Last tragende Wälzkörperreihe dieses Außenringes angeordnet ist, und daß der nicht mit dem zweiten Bauteil verbundene Innenring zum Bauteil einen Abstand hat, der geringer ist als die Höhe der die aufliegende Last tragende Wälzkörperreihe des verbundenen Außenringes.

Es ist aber auch möglich, daß bei einteilig ausgebildetem Mittelring der Innenring und der Außenring aus mehreren Teilringen gebildet sind und eine Teilfuge des mit dem zweiten Bauteil verbundenen Außenringes etwa in der gleichen Höhenlage wie die die aufliegende Last tragende Wälzkörperreihe dieses Außenringes angeordnet ist, und daß der nicht mit dem zweiten Bauteil verbundene Innenring zum Bauteil einen Abstand hat, der geringer ist als die Höhe der die aufliegende Last tragende Wälzkörperreihe des verbundenen Außenringes.

Das erfindungsgemäße Großwälzlager zeichnet sich vorteilhaft dadurch aus, daß nach Verschleiß mindestens einer Wälzkörperreihe zwischen dem Mittelring und dem mit dem zweiten Bauteil fest verbundenen Außenring die die aufliegende Last tragende Wälzkörperreihe nach Lösen und Entfernen des in der Höhenlage dieser Wälzlagerreihe angeordneten Teilringes ausgebaut und das zweite Bauteil nach Absenken auf den bisher nicht fest verbundenen Innenring mit diese fest verbunden werden kann.

In anderer Ausgestaltung des Erfindungsgedankens ist es auch möglich, daß der mit dem zweiten Bauteil verbundene Innenring ebenfalls aus mehreren Teilringen besteht und eine Teilfuge dieses Innenringes etwa in der gleichen Höhenlage wie die die aufliegende Last tragende Wälzkörperreihe dieses Innenringes angeordnet ist, und daß der nicht mit dem zweiten Bauteil verbundene Außenring zum Bauteil einen Abstand hat, der geringer ist als die Höhe der die aufliegende Last tragende Wälzkörperreihe des verbundenen Innenringes.

Das erfindungsgemäße mittenfreie Großwälzlager kann vorteilhaft mit einfachsten Mitteln ohne zusätzliche Bauteile mit der Anschlußkonstruktion verbunden werden. Das zweite Wälzlagersystem wird vor dem Ausfall des ersten Wälzlagersystems nicht belastet. Weiterhin ist das Lager mit der Anschlußkonstruktion statisch besser verbunden, hervorgerufen durch die vollflächige Auflage der Anschlußflächen zwischen Lager und erstem bzw. zweitem Bauteil. Der Umbau kann in einfacher Weise durchgeführt werden, weil keine Zwischenstücke positioniert und in der richtigen Lage fixiert werden müssen. Vorteilhaft muß das zweite Bauteil nur auf das zweite Wälzlagersystem abgesenkt werden und kommt hier vollflächig zur Auflage. Es ist eine komplette Vormontage auch des zweiten Lagersystems möglich. Dadurch sind Umbauteile vorteilhaft nicht über Jahre für einen evtl. Umbau bereitzuhalten.

Ausführungsbeispiele der Erfindung sind in den Zeichnungen schematisch dargestellt und werden im folgenden näher beschrieben. Es zeigen:

Figur 1 einen Schnitt durch ein Großwälzlager mit geteiltem Mittelring, bei dem das zweite Bauteil ursprünglich auf dem Außenring aufliegt.

Figur 2 das Großwälzlager nach Figur 1 nach Inbetriebnahme der Reservelaufbahnen

Figur 3 ein Großwälzlager mit geteiltem Innen-und Außenring, bei dem das zweite Bauteil ursprünglich auf dem Außenring aufliegt,

Figur 4 ein Großwälzlager entsprechend Figur 3 nach Inbetriebnahme der Reservelaufbahnen,

Figur 5 ein Großwälzlager entsprechend Figur 1, bei dem das zweite Bauteil jedoch ursprünglich auf einem Innenring aufliegt,

Figur 6 ein Großwälzlager nach Figur 5 nach Inbetriebnahme der Reservelaufbahnen und

Figur 7 ein Großwälzlager entsprechend Figur 3 mit einem Außenring bestehend aus nur zwei Teilringen.

Figur 8 ein Großwälzlager entsprechend Figur 7 mit Kugeln als Wälzkörper.

Die dargestellten Großwälzlager in Doppelbauweise bestehen aus drei Lagerringen, nämlich aus Mittelring 1, Außenring 2 und Innenring 3. Das Doppellager ist als doppeltes, dreireihiges Rollenlager ausgebildet. Zwischen den Lagerringen sind jeweils die Axialkräfte aufnehmenden Tragrollenreihen 4, 7 und Halterollenreihen 5, 8 sowie die Radialkräfte übertragende Radialrollenreihen 6, 9 angeordnet.

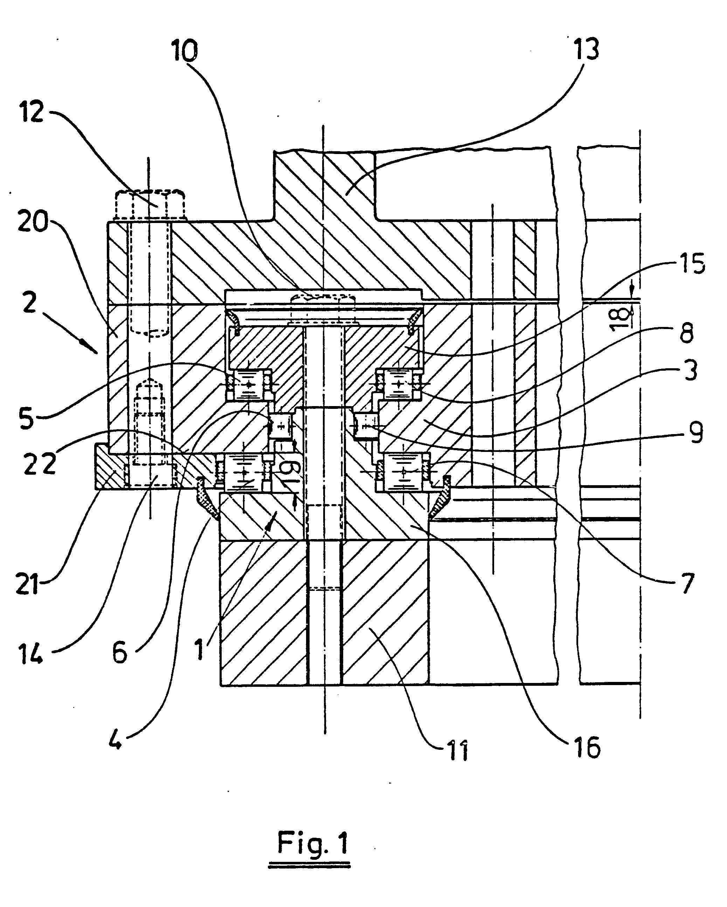

Das in Figur 1 dargestellte Lager ist mit seinem Mittelring 1 über Befestigungsschrauben 10 an einem ersten Bauteil 11 befestigt und mit seinem Außenring 2 über weitere Verbindungsschrauben 12 an einem zweiten Bauteil 13 befestigt und verbindet diese beiden Bauteile drehbeweglich.

Nach Verschleiß einer oder mehrerer Wälzkörperreihen 4, 5, 6 zwischen Mittelring 1 und Außenring 2 ist vorgesehen, die bisher unbelasteten Wälzkörperreihen 7, 8, 9, auf den Reservelaufbahnen zu belasten und von diesen die Drehfunktion übernehmen zulassen. Aus diesem Grunde werden im Ausführungsbeispiel die versetzt zu den Verbindungsschrauben 12 angeordneten Halteschrauben 14 des zu diesem Zweck etwa in Höhe der die aufliegende Last tragenden Rollenreihe 4 durch eine Teilfuge 22 geteilten Außenringes 2 gelöst, so daß gegenüber dem Teilring 20 der Teilring 21 nach unten verschoben werden kann.

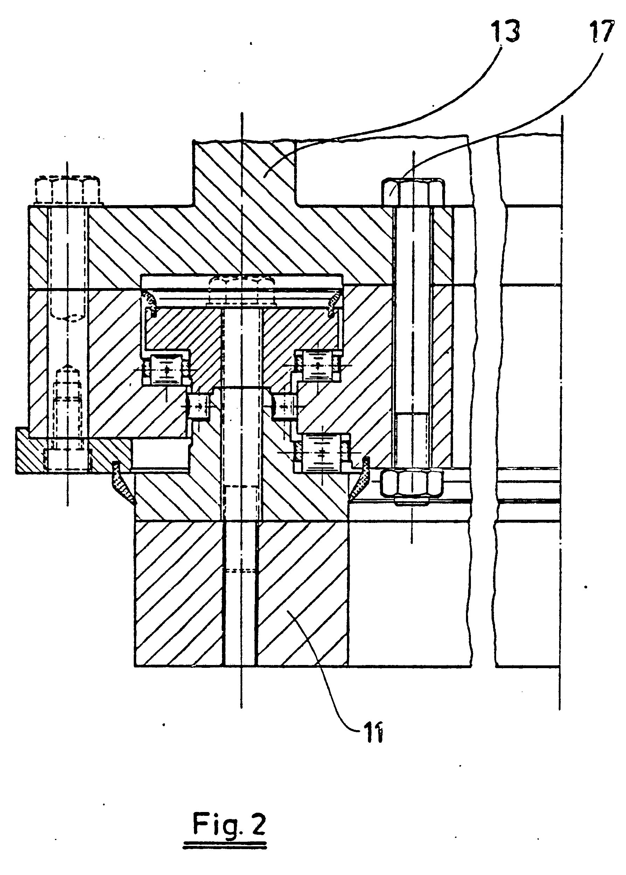

Durch die entstandene Öffnung des Außenringes 2 kann nach Anheben des zweiten Bauteils 13 die die aufliegende Last tragende Rollenreihe 4 radial entfernt werden. Nach Entfernen dieser Tragrollenreihe 4, wird das zweite Bauteil 13 bis auf den Innenring 3 abgesenkt und dann mit diesem über Schrauben 17 verbunden (Figur 2). Der Teilring 21 kann wieder mit Hilfe der Halteschrauben 14 mit dem Teilring 20 verbunden werden.

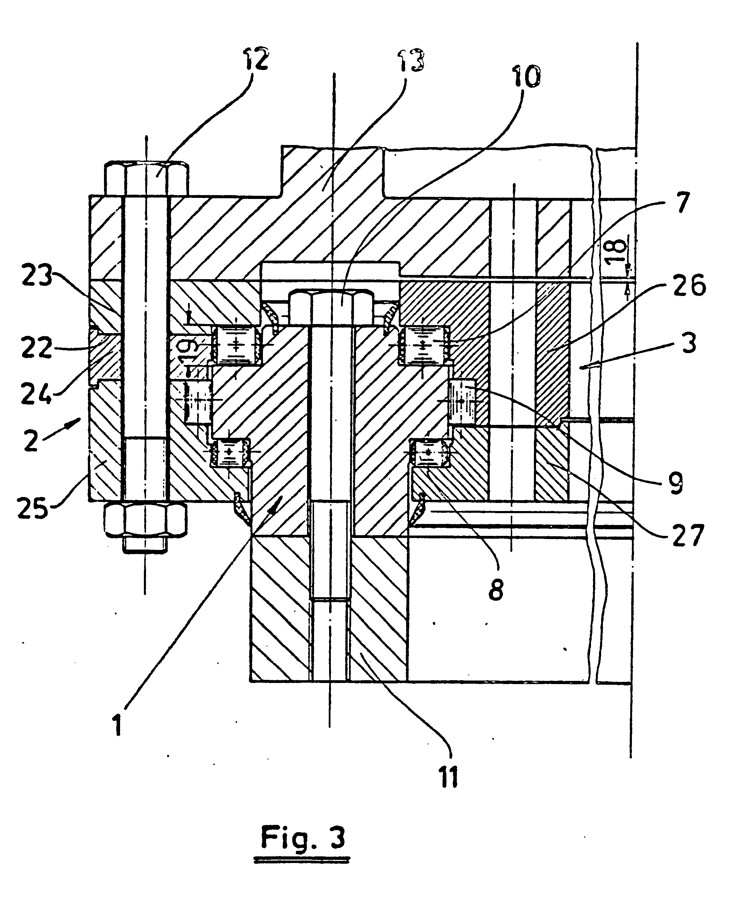

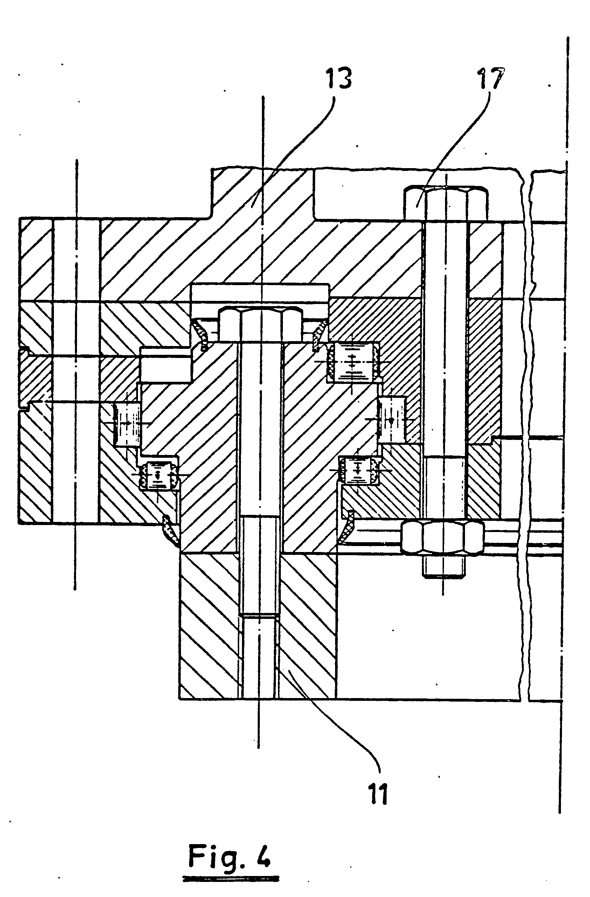

Figur 3 zeigt ein erfindungsgemäßes Lager mit einem ungeteilten Mittelring 1 und geteiltem Außenring 2 und Innenring 3. Der Innenring 3 besteht aus zwei Teilringen 26, 27 und der Außenring 2 besteht aus drei Teilringen 23, 24, 25. Dabei ist die Teilfuge 22 etwa in Höhe der die aufliegende Last tragenden Rollenreihe 4 angeordnet. Nach Verschleiß des ersten Wälzlagersystems, bestehend aus den Rollenreihen 4, 5, 6, werden die Verbindungsschrauben 12 gelöst, so daß durch Herabsenken der Teilringe 24, 25 und Anheben des zweiten Bauteils 13 die die aufliegende Last tragende Rollenreihe 4 radial durch die so entstandene nach oben durch die Teilfuge 22 begrenzte Öffnung entfernt werden kann. Danach wird das zweite Bauteil 13 auf den Innenring 3 abgesenkt, und nach Anziehen der Schrauben 17 kann nun das bisher unbelastete Lagersystem mit den Rollenreihen 7, 8, 9 die Lagerfunktion übernehmen (Figur 4). Bei dieser Bauform ist es auch möglich, außer den die aufliegende Last tragenden Rollenreihen 4 auch die Radialrollenreihe 6 des ersten Lagersystems zu entfernen. Bei entsprechend weitem Absenken des Teilringes 25 kann auch die Halterollenreihe 5 entfernt werden.

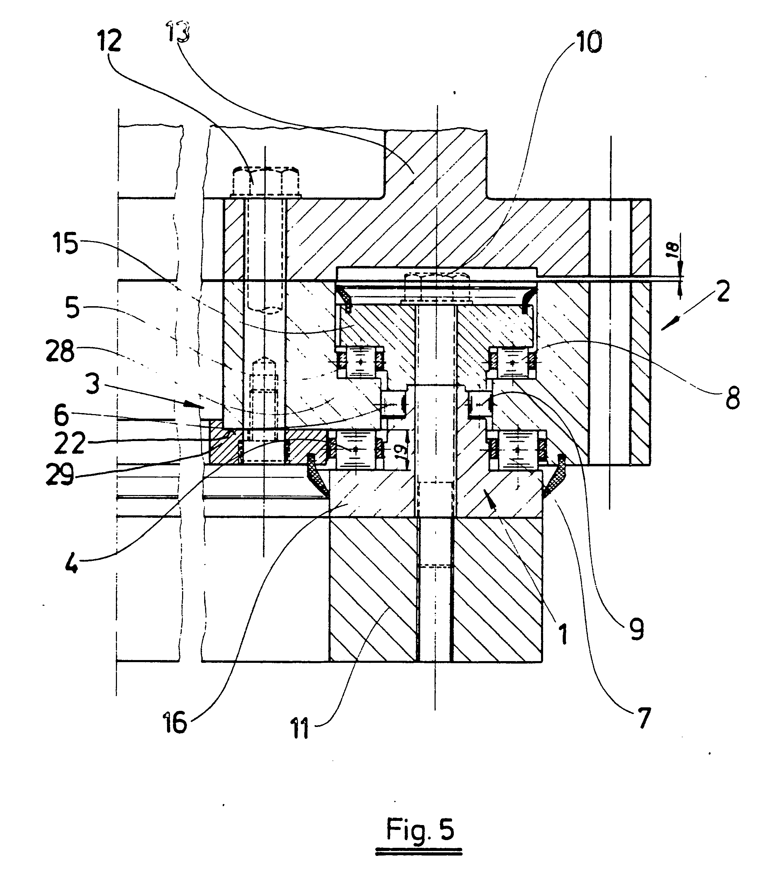

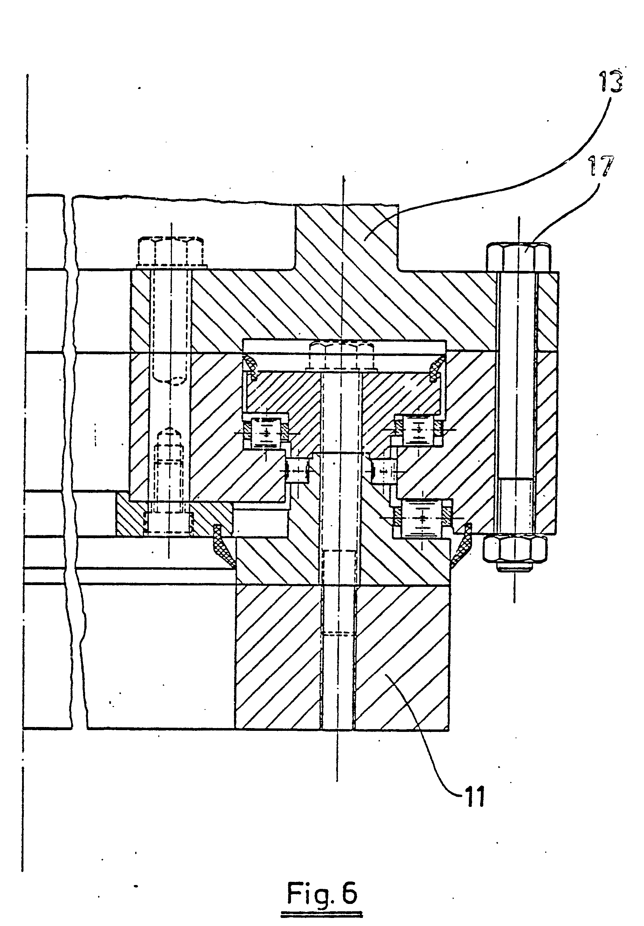

Figur 5 zeigt ein Lagersystem entsprechend Figur 1, bei dem jedoch ursprünglich die Wälzkörper 4, 5, 6 zwischen Mittelring 1 und Innenring 3 belastet sind. Dabei ist dann der Innenring 3 geteilt ausgeführt und besteht aus den Teilringen 28, 29. Der Umbau nach Verschleiß einer ursprünglich belasteten Rollenreihe 4, 5, 6 geschieht entsprechend wie zu Figur 1 beschrieben und ist in Figur 6 dargestellt. Ähnlich wie Figur 5 und 6 kann auch ein Lager gemäß Figur 3 mit ungeteiltem Mittelring zuerst mit dem Innenring 3 am zweiten Bauteil 13 befestigt sein.

Bei den Ausbildungen nach Figur 1, 2, 5, 6 können die eigentlichen Verbindungsschrauben 12, die das zweite Bauteil 13 mit dem Außenring 2 bzw. dem Innenring 3 verbinden, während der Umbauarbeiten fest verspannt bleiben. Sie können erst gelöst werden, wenn der Umbau beendet ist und die Schrauben 17, die den dann mit dem zweiten Bauteil 13 verbundenen Innenring 3 bzw. Außenring 2 verbinden, angezogen sind. Damit ist ein Abkippen des zweiten Bauteils 13 während des Umbauzeitraumes, hervorgerufen durch zeitweiliges, teilweises Lösen von Schrauben, ausgeschlossen.

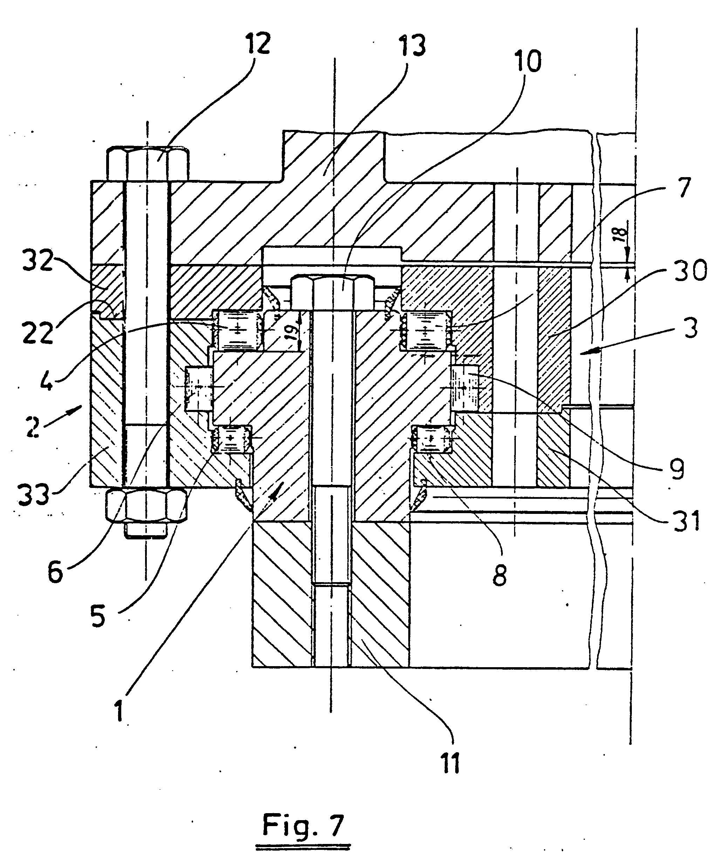

Figur 7 zeigt eine Lagerform entsprechend Figur 3 mit geteiltem Außenring 2 und geteiltem Innenring 3. Hierbei ist jedoch der Außenring nur in zwei Teilringe 32, 33 geteilt. Die Teilfuge 22 liegt wiederum in Höhe der die aufliegende Last tragenden Rollenreihe 4. Diese Bauform ist nicht so aufwendig wie die Bauform gemäß Figur 3. Zum Entfernen der Halterollenreihe 5 und Radialrollenreihe 6 muß jedoch der Teilring 33 sehr weit abgesenkt werden.

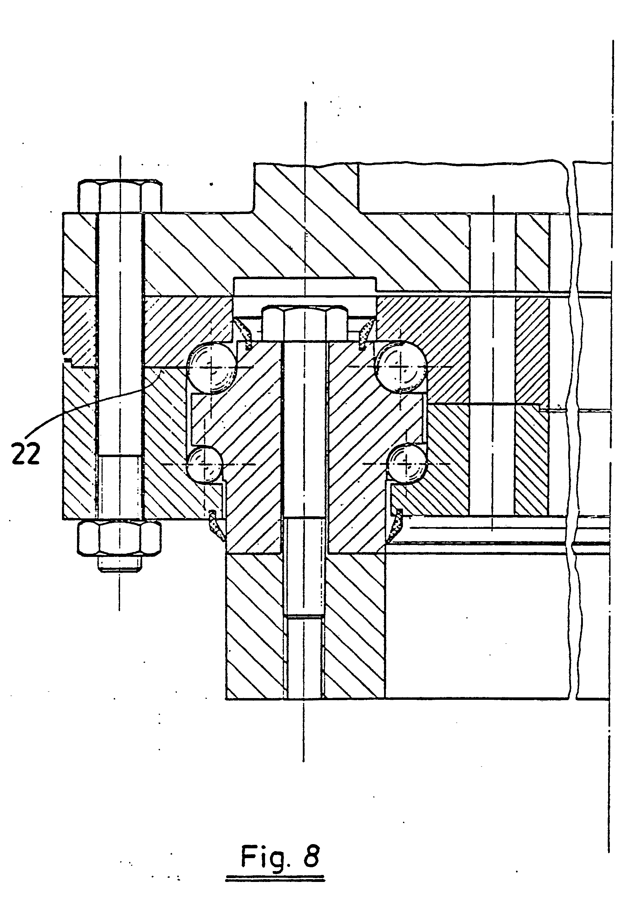

Die Erfindung ist nicht beschränkt auf doppelte dreireihige Rollenlager. Auch andere Wälzlagerbauformen, wie z. B doppelte zweireihige Kugellager können entsprechend der Erfindung ausgebildet werden (Figur 8).

1   Mittelring
2   Außenring
3   Innenring
4   die aufliegende Last tragende Rollenreihe
5   Halterollenreihe
6   Radialrollenreihe
7   Tragrollenreihe
8   Halterollenreihe
9   Radialrollenreihe
10   Befestigungsschraube
11   erstes Bauteil
12   Verbindungsschraube
13   zweites Bauteil
14   Halteschraube
15   Teilring des Mittelringes
16   Teilring des Mittelringes
17   Schraube
18   Abstand
19   Höhe
20   Teilring des Außenringes
21   Teilring des Außenringes
22   Teilfuge
23   Teilring des Außenringes
24   Teilring des Außenringes
25   Teilring des Außenringes
26   Teilring des Innenringes
27   Teilring des Innenringes
28   Teilring des Innenringes
29   Teilring des Innenringes
30   Teilring des Innenringes
31   Teilring des Innenringes
32   Teilring des Außenringes
33   Teilring des Außenringes

## Patentansprüche

1. Mittenfreies Großwälzlager in Doppelbauweise mit drei Lagerringen (1, 2, 3), von denen zwei unabhängig von einander und gegenüber dem dritten verdrehbar sind, und zwischen diesen angeordneten Wälzkörperreihen (4, 5, 6, 7, 8, 9) zum drehbeweglichen Verbinden zweier Bauteile (11, 13), wobei ein Mittelring (1), bestehend aus mehreren Teilringen (15,16), mit einem ersten Bauteil (11) und ein Außenring (2) oder ein Innenring (3) mit einem zweiten Bauteil (13) fest verbindbar ist, dadurch gekennzeichnet, daß der mit dem zweiten Bauteil (13) verbundene Außenring (2) ebenfalls aus mehreren Teilringen (20, 21) besteht und eine Teilfuge (22) dieses Außenringes etwa in der gleichen Höhenlage wie die die aufliegende Last tragende Wälzkörperreihe (4) dieses Außenringes angeordnet ist, und daß der nicht mit dem zweiten Bauteil (13) verbundene Innenring (3) zum Bauteil (13) einen Abstand (18) hat, der geringer ist als die Höhe (19) der die aufliegende Last tragende Wälzkörperreihe (4) des verbundenen Außenringes (2).

2. Großwälzlager nach Anspruch 1, dadurch gekennzeichnet, daß bei einteilig ausgebildetem Mittelring (1) der Innenring (3) und der Außenring (2) aus mehreren Teilringen (23, 24, 25, 26, 27) gebildet sind und eine Teilfuge (22) des mit dem zweiten Bauteil (13) verbundenen Außenringes (2) etwa in der gleichen Höhenlage wie die die aufliegende Last tragende Wälzkörperreihe (4) dieses Außenringes angeordnet ist, und daß der nicht mit dem zweiten Bauteil (13) verbundene Innenring (3) zum Bauteil (13) einen Abstand (18) hat, der geringer ist als die Höhe (19) der die aufliegende Last tragende Wälzkörperreihe (4) des verbundenen Außrenringes (2).

3. Mittenfreies Großwälzlager in Doppelbauweise mit drei Lagerringen (1, 2, 3), von denen zwei unabhängig voneinander und gegenüber dem dritten verdrehbar sind, und zwischen diesen angeordneten Wälzkörperreihen (4, 5, 6, 7, 8, 9) zum drehbeweglichen Verbinden zweier Bauteile (11, 13), wobei ein Mittelring (1), bestehend aus mehreren Teilringen (15, 16), mit einem ersten Bauteil (11) und ein Außenring (2) oder ein Innenring (3) mit einem zweiten Bauteil (13) fest verbindbar ist, dadurch gekennzeichnet, daß der mit dem zweiten Bauteil (13) verbundene Innenring (3) ebenfalls aus mehreren Teilringen (28, 29) besteht und eine Teilfuge (22) dieses Innenringes etwa in der gleichen Höhenlage wie die die aufliegende Last tragende Wälzkörperreihe (4) dieses Innenringes angeordnet ist, und daß der nicht mit dem zweiten Bauteil (13) verbundene Außenring (2) zum Bauteil (13) einen Abstand (18) hat, der geringer ist als die Höhe (19) der die aufliegende Last tragende Wälzkörperreihe (4) des verbundenen Innenringes (3).

## Claims

1. A large centre-less rolling bearing of double construction comprising three bearing rings (1, 2, 3), two of which are independent of each other and rotatable with respect to the third, and rows of rolling members (4, 5, 6, 7, 8, 9) arranged therebetween for rotatably connecting two components (11, 13), a centre ring (1) consisting of several partial rings (15, 16) being firmly connectable with a first component (11) and an outer ring (2) or an inner ring (3) being firmly connectable with a second component (13), characterized in that the outer ring (2) connected with the second component (13) also consists of several partial rings (20, 21) and a joint (22) of this outer ring is arranged at approximately the same level as the applied load-carrying rolling member row (4) of this outer ring, and in that the inner ring (3) not connected with the second component (13) is separated from the component (13) by a distance (18) smaller than the height (19) of the rolling member row (4), carrying the applied load, of the connected outer ring (2).

2. A large rolling bearing according to claim 1, characterized in that with a centre ring (1) constructed as one part, the inner ring (3) and the outer ring (2) are constructed of several partial rings (23, 24, 25, 26, 27) and a joint (22) of the outer ring (2) connected with the second component (13) is arranged approximately at the same level as the applied load-carrying rolling member row (4) of this outer ring, and in that the inner ring (3) not connected with the second component (13) is separated from the component (13) by a distance (18) smaller than the height (19) of the rolling member row (4), carrying the applied load, of the connected outer ring (2).

3. A large centre-less rolling bearing of double construction comprising three bearing rings (1, 2, 3), two of which are independent of each other and rotatable with respect to the third, and rows of rolling members (4, 5, 6, 7, 8, 9) arranged therebetween for rotatably connecting two components (11, 13), a centre ring (1), consisting of several partial rings (15, 16), being firmly connectable with a first component (11) and an outer ring (2) or an inner ring (3) being firmly connectable with a second component (13), characterized in that the inner ring (3) connected with the second component (13) also consists of several partial rings (28, 29) and a joint (22) of this inner ring is arranged at approximately the same level as the applied load-carrying rolling member row (4) of this inner ring, and in that the outer ring (2) not connected with the second component (13) is separated from the component (13) by a distance (18) smaller than the height (19) of the rolling member row (4), carrying the applied load, of the connected inner ring (3).

**Revendications**

1. Palier à contact de roulement, double, à trois bagues de roulement (1, 2, 3), dont deux peuvent tourner indépendamment l'une de l'autre, et par rapport à la troisième, et entre lesquelles sont agencées des couches de galets (4, 5, 6, 7, 8, 9) pour relier à rotation deux pièces (11, 13), une bague centrale (1), réalisée en plusieurs pièces (15, 16), pouvant être reliée à une première pièce (11) et une bague externe (2) ou une bague interne (3) pouvant être reliée à une seconde pièce (13), caractérisé en ce que la bague externe (2) reliée à la seconde pièce (13) se compose également de plusieurs portions de bague (20, 21), et qu'un joint de séparation (22) de cette bague externe se trouve en substance à la même hauteur que la couche de galets (4) supportant la charge de cette bague externe, et en ce que la bague interne (3) qui n'est pas reliée à la deuxième pièce (13) est écartée de celle-ci d'une distance (18) inférieure à la hauteur (19) de la couche de galets (4) supportant la charge de la bague externe liée (2).

2. Palier selon la revendication 1, caractérisé en ce que, en présence d'une bague centrale (1) réalisée d'une pièce, la bague interne (3) et la bague externe (2) sont réalisées en plusieurs pièces (23, 24, 25, 26, 27), et un joint de séparation (22) de la bague externe (2) reliée à la seconde pièce (13) se trouve en substance à la même hauteur que la couche de galets (4) supportant la charge de cette bague externe, et que la bague interne (3) qui n'est pas reliée à la deuxième pièce (13) est écartée de celle-ci d'une distance (18) inférieure à la hauteur (19) de la couche de galets (4) supportant la charge de la bague externe liée (2).

3. Palier à contact de roulement, double, à trois bagues de roulement (1, 2, 3), dont deux peuvent tourner indépendamment l'une de l'autre, et par rapport à la troisième, et entre lesquelles sont agencées des couches de galets (4, 5, 6, 7, 8, 9) pour relier à rotation deux pièces (11, 13), une bague centrale (1), réalisée en plusieurs pièces (15, 16), pouvant être reliée à une première pièce (11) et une bague externe (2) ou une bague interne (3) pouvant être reliée à une seconde pièce (13), caractérisé en ce que la bague interne (3) reliée à la seconde pièce (13) se compose également de plusieurs portions de bague (28, 29), et qu'un joint de séparation (22) de cette bague interne se trouve en substance à la même hauteur que la couche de galets (4) supportant la charge de cette bague interne, et en ce que la bague externe (2) qui n'est pas reliée à la deuxième pièce (13) est écartée de celle-ci d'une distance (18) inférieure à la hauteur (19) de la couche de galets (4) supportant la charge de la bague interne liée (3).

0 158 015

Fig. 1

Fig. 2

0 158 015

Fig. 3

5

Fig. 4

Fig. 5

Fig. 6

Fig. 7

22

Fig. 8

15